# EUROPÄISCHE PATENTSCHRIFT

(11) **EP 1 229 281 B1**
(45) Veröffentlichungstag und Bekanntmachung des Hinweises auf die Patenterteilung: **18.06.2008**
(21) Anmeldenummer: 02002350.3
(22) Anmeldetag: 31.01.2002
(51) Int. Cl.: F16L 3/22

(54) **Tragvorrichtung für Installationselemente**
Supporting structure for fixation devices
Support pour éléments de fixation

(30) Priorität: 02.02.2001 DE 10104668
(43) Veröffentlichungstag der Anmeldung: 07.08.2002
(73) Patentinhaber: MÜPRO GMBH, 65719 Hofheim-Wallau (DE)
(72) Erfinder: Homann, Börries Dipl.-Ing, 64283 Darmstadt (DE)
(74) Vertreter: Erb, Henning

(56) Entgegenhaltungen:
- EP-A- 0 568 887
- EP-A- 0 824 170
- DE-A- 4 402 294
- FR-A- 1 019 135
- GB-A- 1 218 264

## Beschreibung

Die Erfindung befaßt sich mit einer Tragvorrichtung mit einer flachen Montageschiene und einer Befestigungsplatte zur Installation von Armaturen und Leitungen im Heizungs-, Sanitär-und Lüftungsbereich, die Lochmuster aufweisen, wobei sich Löcher der Montageschiene mit Löchern der Befestigungsplatte in der Montagestellung in Deckung befinden, in welcher mit Hilfe von Befestigungselementen der Armaturen die Montageschiene und die Befestigungsplatte miteinander verbunden sind, wobei die Befestigungsplatte an der Montageschiene mit Hilfe von Haltemitteln vorläufig festlegbar ist, die die Längskanten der Montageschiene übergreifen.

Tragvorrichtungen aus dem Sanitärbereich sind beispielsweise aus der EP 0 568 887 A1 bekannt. Bei derartigen Tragvorrichtungen weisen die Montageschienen eine Reihe von Lochreihen mit Befestigungslöchern auf, von welchem ein Teil mit Durchgangsbohrungen einer Befestigungsplatte in Deckung gebracht werden kann, gegen welche die Armaturen oder Leitungen dann abschließend verschraubt werden. Problematisch bei den bekannten Tragvorrichtungen ist, daß die zunächst lose Befestigungsplatte erst durch die Befestigungsschrauben der Armaturen bzw. Leitungen an der Montageschiene festlegbar ist. Da der Monteur zum Anbringen der Befestigungsschrauben beide Hände benötigt, sieht er sich vor das Problem gestellt, die Befestigungsplatte in der gewünschten Lage zu halten, bis wenigstens eine Schraube endgültig angezogen ist.

Die EP 0 824 170 A1 beschreibt eine Tragvorrichtung aus dem Sanitärbereich der eingangs genannten Art, bei welcher die Haltemittel die Montageschienen übergreifen.

Die GB 1 218 264 beschreibt eine U-förmige Schiene mit einer Lochreihe, in die ein Einsetzelement einsteckbar ist, wobei die Vorrichtung dem Gebiet der Elektrotechnik zugeordnet ist.

Die Aufgabe der vorliegenden Erfindung besteht darin, eine Tragvorrichtung zu schaffen, deren Handling durch definierte Reibkräfte zwischen Montageschiene und Befestigungsplatte vereinfacht ist.

Erfindungsgemäß wird die Aufgabe durch eine Tragvorrichtung der eingangs beschriebenen Art gelöst, bei welcher an der Befestigungsplatte wenigstens ein Federelement angeordnet ist, das in der vorläufig an der Montageschiene festgelegten Stellung federnd an dieser anliegt, wodurch definierte Reibkräfte aufgebaut werden, was insbesondere bei metallischen Haltemitteln von Vorteil ist, da sich dort ohne Hilfsmittel bestimmte Reibkräfte mit den Haltemitteln allein nur schwer realisieren lassen.

Das Federelement kann z.B. aus federnden Laschen oder auch aus einem Gummielement bestehen, das zwischen den Haltemitteln und der Montageschiene elastisch verklemmbar ist. Der hohe Reibkoeffizient des Gummis sorgt dabei für einen Reibwiderstand, der eine sichere vorläufige Festlegung gewährt. Beilspielsweise kann ein Gummielement in einem schienenartig ausgebildeten Halteelement an der Befestigungsplatte liegen.

Mit Hilfe der zusätzlichen Haltemittel, die an der Befestigungsplatte selbst oder an einem Rahmen, in welchem die Befestigungsplatte sitzt, vorgesehen sein können, bietet die erfindungsgemäße Tragvorrichtung den Vorteil, daß zunächst die Befestigungsplatte in der gewünschten Position an der Montageschiene festlegbar ist und der Monteur anschließend die Befestigung der Armaturen oder Versorgungsleitungen mit zwei freien Händen durchführen kann, ohne befürchten zu müssen, daß die Befestigungsplatte herunterfällt oder in eine unerwünschte Lage verrutscht.

Besonders bevorzugt sind Haltemittel, die eine stufenlose Festlegung der Befestigungsplatte in verschiedenen Längspositionen an der Montageschiene erlauben. Während es bei speziell miteinander kombinierten Montageschienen und Befestigungsplatten ausreichend sein kann, bestimmte Arretierpositione vorzugeben und dadurch die Lochmuster der Montageschiene und der Befestigungsplatte zur Deckung zu bringen, ist die stufenlose Festlegbarkeit bei universellen Montageschienen von Vorteil, deren Lochmuster meist aus mehreren, Langlöcher aufweisenden Lochreihen bestehen und bei welchen unterschiedliche Befestigungsplatten zum Einsatz kommen können. Die stufenlose Festlegbarkeit kann hier das Finden einer sich deckenden Anordnung erleichtern.

Besonders zweckmäßig ist eine Ausführungsform, bei welcher die Befestigungsplatte in der vorläufig festgelegten Stellung in Längsrichtung zu der Montageschiene gegen Reibwiderstand verschieblich ist. So kann der Monteur die Befestigungsplatte zunächst an der Montageschiene festlegen und dann durch nachträgliche Korrektur der Lage die Lochmuster in die gewünschte Relativlage zueinander bringen. Der Reibwiderstand sollte so bemessen sein, daß er das Verschieben der Befestigungsplatte nicht unnötig erschwert, gleichzeitig jedoch eine ausreichende Vorfixierung der Befestigungsplatte sicherstellt, um ein Verrutschen zu vermeiden.

Besonders bevorzugt ist eine Ausführungsform, bei welcher an der Montageschiene in Längsrichtung mehrere in Reihe angeordnete Vertiefungen vorgesehen sind, in welche die Federlaschen leicht lösbar einschnappbar sind. In diesen Vorraststellungen können sich dann z. B. bestimmte Lochmuster decken, so daß die Voreinstellung der Befestigungsplatte vereinfacht wird.

Wie bereits zuvor erwähnt, kann es zweckmäßig sein, daß die Befestigungsplatte in einem Rahmen sitzt oder an wenigstens einem klammerartigen Halter, an welchem die Haltemittel angeordnet sind. Eine derartige Lösung erlaubt in besonders bevorzugter Weiterbildung der Erfindung, daß der Rahmen bzw. Halter nach der endgültigen Montage entfernbar ist. Bei klammerartigen Haltern ist eine paarweise Anordnung zu bevorzugen.

Während bei unmittelbar an der Befestigungsplatte angeordneten Haltemitteln mit gesteigerten Fertigungskosten zu rechnen ist, kann ein nach dem Anziehen der Befestigungsschrauben entfernbarer Rahmen eine kostengünstige Alternative darstellen, da er die Verwendung von Befestigungsplatten erlaubt, die in der Herstellung nicht teurer als die bisher üblichen Befestigungsplatten sind. Selbst wenn der Rahmen nicht entfernbar ist, kann er doch beispielsweise als Spritzgußteil aus Kunststoff kostengünstig gefertigt werden, da die bei der Vorfixierung auftretenden Kräfte nur sehr gering sind. Die eigentlichen Befestigungskräfte werden dann durch die Schraubverbindung zwischen der Befestigungsplatte und der Montageschiene aufgenommen. Bei Befestigungsplatten aus Kunststoff ist es jedoch unter Umständen ohne großen Mehraufwand denkbar, die erforderlichen Haltemittel an der Befestigungsplatte anzuformen.

Ein nach der endgültigen Montage entfernbarer Rahmen kann beispielsweise eine Ausnehmung mit Haltelaschen oder Haltekanten aufweisen, die einen Halt senkrecht zur Schienenebene bilden. Die Befestigungsschrauben können dabei durch die Ausnehmung angezogen werden, wobei sich nach der endgültigen Montage nach dem Lösen der Haltemittel der Rahmen mit seinen Haltelaschen bzw. Haltekanten leicht nach hinten von der mit der Montageschiene verspannten Befestigungsplatte abheben lässt. Ein derartiger Rahmen läßt sich beliebig oft wiederverwenden und stellt damit eine besonders kostengünstige Variante der Erfindung dar.

Die Haltemittel verfügen vorzugsweise über wenigstens ein elastisches Rastelement, das beim Andrücken der Befestigungsplatte an die Montageschiene diese hintergreift. Die Rastelemente, die durch spezielle Öffnungen der Montageschiene greifen oder diese an ihrem Rand umfassen können, lassen sich insbesondere bei Spritzgußteilen aus Kunststoff besonders einfach vorsehen. Auch das Anspritzen von Haltemitteln aus Kunststoff an eine metallische Befestigungsplatte ist denkbar. Mögliche Alternativen zu Rastelementen wären beispielsweise magnetische oder adhäsiv wirkende Haltemittel.

Bei einer von der Handhabung besonders einfachen Ausführungsform der Haltemittel ist vorgesehen, daß an einer Längskante der Befestigungsplatte bzw. des Rahmens das wenigstens eine elastische Rastelement zum Übergreifen einer Längsseite der Montageschiene und an der anderen Längskante ein schienenartiges Halteelement zum Umfassen der anderen Längsseite der Montageschiene vorgesehen ist. Bei einer derartig ausgebildeten Befestigungsplatte bzw. ausgebildetem Rahmen wird zunächst das schienenartige Halteelement an der oberen oder unteren Längskante der Montageschiene angesetzt und anschliessend verrasten die vorzugsweise zwei Rastelemente über die andere Längsseite der Montageschiene. Eine derartige Lösung bietet auch den bereits zuvor erwähnten Vorteil einer Verschiebbarkeit in Längsrichtung, wobei sich die Reibkräfte durch die Anlagekräfte der Rastelemente oder der bereits erwähnten, speziellen Federlaschen an der Montageschiene gezielt beeinflussen lassen.

Grundsätzlich eignet sich die erfindungsgemäße Tragvorrichtung für Montageschienen aus gelochtem Flachstahl ebenso wie für Montageschienen aus Winkelprofilen.

Nachfolgend wird anhand der beigefügten Zeichnungen näher auf Ausführungsbeispiele der Erfindung eingegangen. Es zeigen:
- Fig. 1: eine perspektivische Ansicht einer Montageschiene;
- Fig. 2: eine perspektivische Ansicht einer Befestigungsplatte mit angeformten Haltemitteln;
- Fig. 3: eine perspektivische Ansicht eines Rahmens zur Aufnahme einer Befestigungsplatte;
- Fig. 4: eine perspektivische Ansicht einer Befestigungsplatte für den Rahmen nach Fig. 3;
- Fig. 5: eine an der Montageschiene gemäß Fig. 1 vorläufig fixierte Befestigungsplatte nach Fig. 2;
- Fig. 6: die Montage der Befestigungsplatte gemäß Fig. 4 mit Hilfe des Rahmens gemäß Fig. 3 an der Montageschiene nach Fig. 1;
- Fig. 7: eine perspektivische Ansicht einer weiteren Befestigungsplatte mit separaten, klammerartigen Haltemitteln;
- Fig. 8: eine weitere Ausführungsform einer Befestigungsplatte mit angeformten Haltemitteln.
- Fig. 9: eine perspektivische Ansicht einer weiteren Befestigungsplatte mit einem Gummielement im Bereich der Haltemittel;
- Fig. 10: einen Querschnitt der Befestigungsplatte nach Fig. 9.

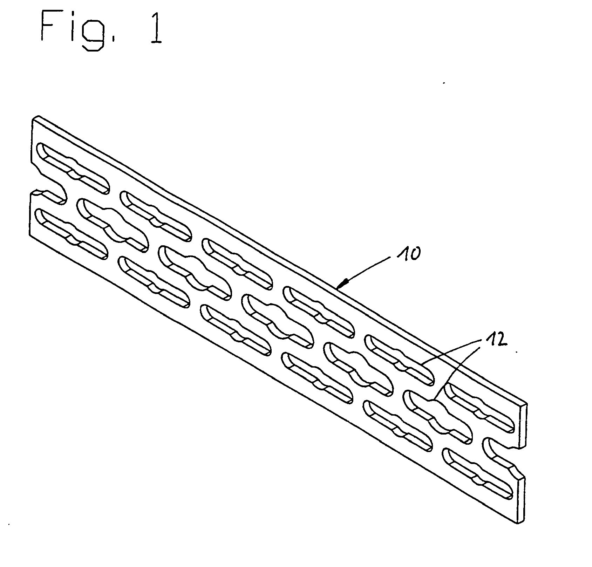

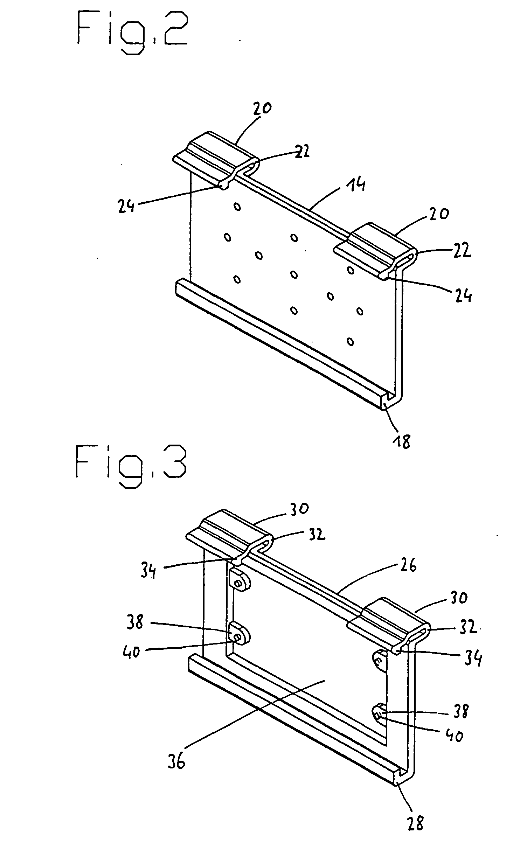

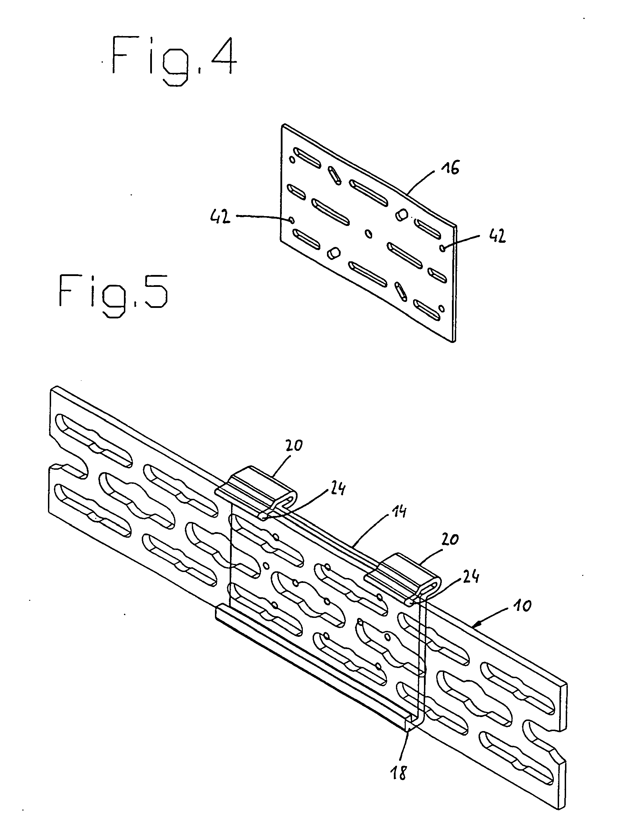

In Fig. 1 ist eine aus Flachstahl gefertigte Montageschiene 10 dargestellt, die mit einem aus drei Lochreihen bestehenden Lochmuster versehen ist, wobei die einzelnen Löcher jeweils als Langlöcher 12 ausgebildet sind. Eine derartige Montageschiene 10 wird im Heizungs-, Sanitär- und Lüftungsbau oft für die Montage von Armaturen oder Versorgungsleitungen verwendet, wobei als Gegenhalt eine Befestigungsplatte 14 (siehe Fig. 2), 16 (siehe Fig. 4) vorgesehen ist, an welcher die Befestigungsschrauben der Armaturen oder Leitungen abgestützt sind. Mindestens eine Lochreihe der jeweiligen Befestigungsplatte 14, 16 stimmt dabei mit einer entsprechenden Lochreihe der Montageschiene 10 überein, wobei die universelle Ausbildung der Langlochreihen der Montageschiene 10 die Verwendung unterschiedlicher Befestigungsplatten 14, 16 mit verschiedenen Lochmustern zuläßt.

Bei der in Fig. 2 gezeigten Befestigungsplatte 14 ist am unteren Rand ein schienenartiges Halteelement 18 vorgesehen, das sich über die gesamte Länge der Befestigungsplatte 14 erstreckt. Am oberen Rand der Befestigungsplatte 14 sind zwei Rastelemente 20 im Bereich der Ecken vorgesehen, die im wesentlichen aus elastischen, am Grundkörper der Befestigungsplatte 14 angeformten Laschen 22 und an deren Enden vorgesehenen Rastnasen 24 bestehen. Eine derartige Befestigungsplatte 14, die je nach Anforderungen an die Belastung aus Kunststoff oder Metall bestehen kann, wird zunächst mit dem Halteelement 18 am oberen oder unteren Rand der Montageschiene 10 eingehängt und anschließend durch Verschwenken flächig an die Montageschiene 10 angepreßt, wobei die beiden Rastnasen 24 aufgrund der nachgiebigen Laschen 22 über den oberen Rand der Montageschiene 10 gleiten und diese verrastend hintergreifen. Im verrasteten Zustand sind Lagekorrekturen der Befestigungsplatte 14 in der Längsrichtung möglich, um das Lochmuster der Befestigungsplatte 14 in die gewünschte Relativlage zu dem Lochmuster der Montageschiene 10 zu bringen. Die am Rand der Montageschiene 10 federnd anliegenden Laschen 22 bauen dabei eine gewisse Reibkraft auf, so daß die Befestigungsplatte 14 nicht unerwünscht verrutschen kann. Die endgültige Fixierung der Befestigungsplatte 14 an der Montageschiene 10 erfolgt durch die Befestigungsschrauben der Armaturen oder Versorgungsleitungen.

Die in Fig. 4 gezeigte Befestigungsplatte 16, die sich nicht wesentlich von bisher bekannten Befestigungsplatten unterscheidet, wird mit Hilfe eines in Fig. 3 gezeigten Rahmens 26 aus Kunststoff vorläufig an der Montageschiene 10 fixiert. Der Rahmen 26 besteht aus Kunststoff und eignet sich insbesondere bei metallischen Befestigungsplatten zur Kostenreduzierung, da die in Fig. 2 gezeigte Ausführungsform bei metallischem Werkstoff relativ hohe Herstellungskosten verursacht.

Die äußere Grundform des Rahmens 26 ähnelt der Befestigungsplatte 14 und entsprechend verfügt der Rahmen 26 über ein unteres Halteelement 28 und zwei Rastelemente 30, die wiederum aus über elastische Laschen 32 an dem Grundkörper des Rahmens 26 angeformte Rastnasen 34 bestehen.

Zur Aufnahme der Befestigungsplatte 16 ist in dem Rahmen eine Durchbrechung 36 vorgesehen, welche neben einer Befestigung von vorne auch die Zugänglichkeit der Befestigungsplatte 16 von hinten zur Verschraubung der Befestigungsschrauben der Armaturen oder Versorgungsleitungen sicherstellt. Insgesamt vier seitliche, in die Durchbrechung 36 ragende Haltelaschen 38 hindern die Befestigungsplatte 16 am Herausfallen aus dem Rahmen 26 nach hinten. Die Haltelaschen 38 verfügen jeweils über einen Haltestift 40, wobei die Haltestifte 40 in zugehörigen Haltebohrungen 42 in der Befestigungsplatte eingreifen und diese somit zusätzlich fixieren. Anstelle der Haltelaschen 38 ist auch eine durchgängige Haltekante denkbar, solange die Zugänglichkeit der Bohrungen in der Befestigungsplatte 16 gewahrt bleibt. Eine Fixierung in der Erstrekkungsebene der Befestigungsplatte 16 kann auch durch eine entsprechend der Fläche der Befestigungsplatte 16 ausgebildete Durchbrechung 36 erreicht werden.

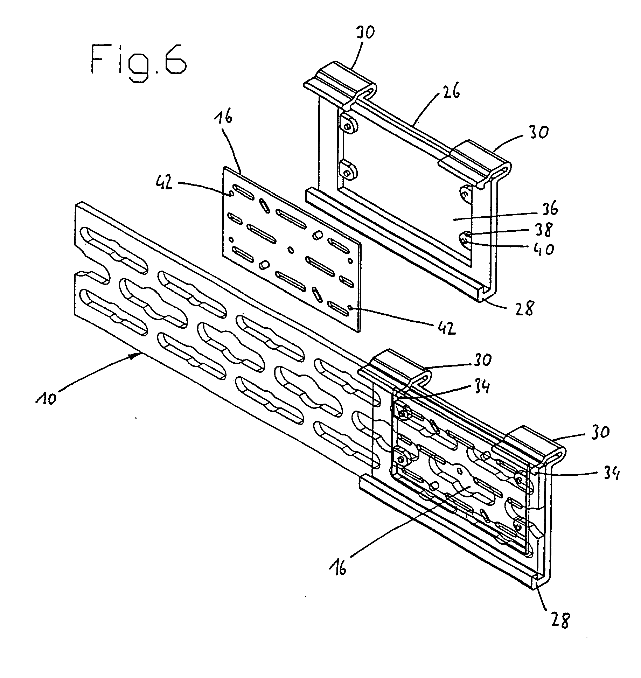

In Fig. 6 ist die Montage der Befestigungsplatte 16 mit Hilfe des Rahmens 26 veranschaulicht, wobei zunächst die Befestigungsplatte 16 auf die Haltelaschen 38 des Rahmens gelegt wird und ggf. eine gewisse Klemmwirkung durch die in die Haltebohrungen 42 eingreifenden Haltestifte 40 erreicht werden kann. Anschließend wird die Einheit aus Rahmen 26 und Befestigungsplatte 16 entsprechend der Befestigungsplatte gemäß Fig. 2 an der Montageschiene 10 festgelegt, wobei wiederum zunächst das Halteelement 28 an einer Längskante der Montageschiene 10 eingehängt und anschließend die Rastelemente 34 durch Verschwenken des Rahmens 26 die andere Längskante der Montageschiene 10 rastend übergreifen. Im Unterschied zu der einstückigen Befestigungsplatte 14 ist es denkbar, nach der erfolgten Verschraubung der Befestigungsplatte 16 mit der Montageschiene 10 die Rastelemente 34 beispielsweise mit einem Schraubendreher zu lösen und die Halterung nach dem Abnehmen zur Vorfixierung weiterer Befestigungsplatten wieder zu verwenden. Hierdurch wird ein bedeutender Kostenvorteil erreicht.

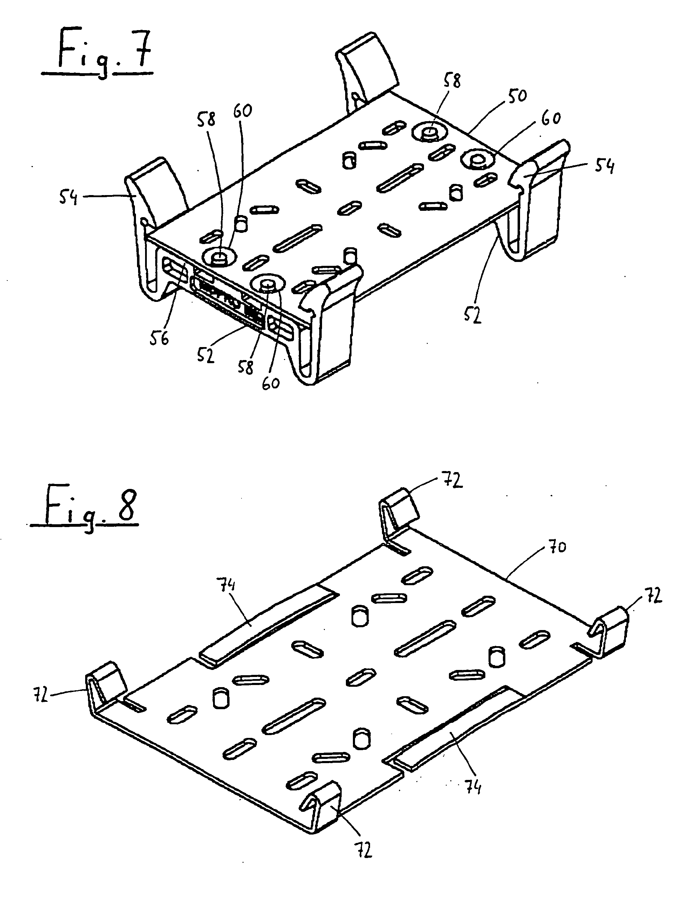

Eine weitere Ausführungsform einer erfindungsgemäßen Tragvorrichtung ist in Fig. 7 gezeigt. Diese besteht im wesentlichen aus einer Befestigungsplatte 50, die ähnlich der in Fig. 4 gezeigten Befestigungsplatte 16 ausgebildet ist. Die Haltemittel bestehen bei dieser Ausführungsform aus zwei klammerartigen Haltebügeln 52, an deren Enden jeweils ein elastisches Rastelement 54 ausgebildet ist. Zwischen den Rastelementen 54 sind Auflagerbereiche 56 vorgesehen, auf welchen die Randbereiche der Befestigungsplatte 50 aufliegen, wobei wiederum Haltestifte 58 in Ausnehmungen 60 in der Befestigungsplatte 50 greifen, um deren Lage mit Bezug auf die Halteklammern 52 zu definieren. Die vorzugsweise aus Kunststoff bestehenden Halteklammern 52 können mit der Befestigungsplatte 50 verschweißt oder an diese angespritzt sein, es ist allerdings auch eine lose Verrastung möglich, so daß die Halteklammern 52 gegebenenfalls nach dem Verschrauben der Befestigungsplatte 50 abgenommen werden können.

In Fig. 8 ist eine Ausführungsform einer Befestigungsplatte 70 dargestellt, die vollständig aus Blech gefertigt ist und über angeformte Blechlaschen 72 als Haltemittel verfügt. Das Lochmuster der Befestigungsplatte 70 entspricht dabei der in Fig. 7 dargestellten Befestigungsplatte 50.

Da bei Blechlaschen 72 das Einhalten bestimmter Toleranzen schwieriger ist als bei Kunststoffformteilen und unter Umständen kein sicherer Sitz der Befestigungsplatte nach der vorläufigen Befestigung an der Montageschiene 10 gegeben sein könnte, verfügt die Befestigungsplatte 70 über zwei seitlich angeformte Federlaschen 74, die nach dem Aufstecken der Blechlaschen 72 auf die Montageschiene 10 an dieser federnd anliegen und dabei definierte Reibkräfte aufbauen. Denkbar wäre es auch, die Federlaschen 74 mit einem Vorsprung zu versehen, der in entsprechende Vertiefungen (nicht gezeigt) an der Montageschiene einschnappt, die über deren Länge in einem bestimmten Rastermaß angeordnet sind. Auf diese Weise kann die Befestigungsplatte 70 leicht mit einem für den Monteur spürbaren Ruck in vorgegebenen Positionen eingerastet werden, in welchen sich beispielsweise bestimmte Lochmuster der Montageschiene 10 und der Befestigungsplatte 70 decken. Selbstverständlich ist die Verrastung durch entsprechenden seitlichen Druck auf die Befestigungsplatte 70 leicht zu überwinden, um das Verschieben nicht unnötig zu behindern.

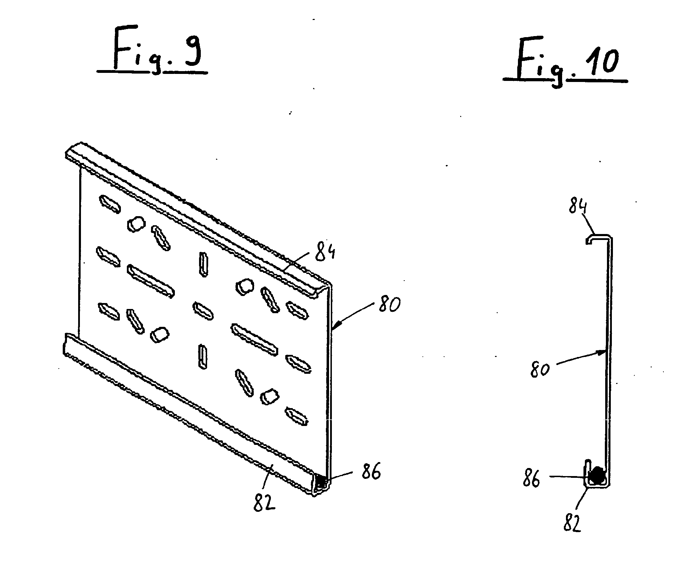

In Fig. 9 ist schließlich eine weitere Befestigungsplatte 80 gezeigt, die an einer Flanke mit einer schienenartigen Halterung 82 und an der gegenüberliegenden Flanke mit einem nur geringfügig umbördelten Vorsprung 84 als Gegenhalt versehen ist. in der Schienenhalterung 82 ist ein Gummi 86 eingelegt, der nach dem Aufsetzen der Platte 80 auf die Montageschiene 10 zwischen deren Unterkante und der Halterung 82 elastisch verklemmt wird (siehe auch Fig. 10). Das Aufsetzen wird durch den die Montageschiene 10 praktisch kaum hintergreifenden Vorsprung 84 vereinfacht und es werden besonders definierte Reibkräfte aufgrund des hohen Reibkoeffizienten und der großen Deformierbarkeit des Gummis erreicht. Kleinere Maßtoleranzen bleiben daher ohne Einfluß auf den sicheren Halt an der Montageschiene in der vorläufig festgelegten Stellung.

Abweichende Ausführungsformen sind insbesondere im Hinblick auf die Haltemittel denkbar. So können statt des schienenart tigen Halteelements 18 bzw. 28 Rastelemente ähnlich der gezeigten Rastelemente 20 bzw. 30 vorgesehen sein. Ferner ist es denkbar, daß die Rastelemente nicht den Montageschienenrand übergreifen, sondern in speziell vorgesehene Öffnungen oder ohnehin im Lochmuster der Montageschiene vorgesehene Öffnungen eingreifen, wobei die vorläufige Festlegung der Befestigungsplatte dann allerdings meist in einer bestimmten Position unverschieblich in Längsrichtung der Montageschiene erfolgt.

## Patentansprüche

1. Tragvorrichtung mit einer flachen Montageschiene (10) mit Längskanten und einer Befestigungsplatte (70, 80) zur Installation von Armaturen und Leitungen im Heizungs-, Sanitär- und Lüftungsbereich, die jeweils Lochmuster (12) aufweisen, wobei sich Löcher (12) der Montageschiene (10) in der Montagestellung mit Löchern der Befestigungsplatte (70, 80) in Deckung befinden, in welcher mit Hilfe von Befestigungselementen der Armaturen oder Leitungen die Montageschiene (10) und die Befestigungsplatte (14, 16) miteinander verbunden sind, wobei die Befestigungsplatte (70; 80) Haltemittel aufweist und an der Montageschiene (10) mit Hilfe von denselben (72; 82, 84) vorläufig festlegbar ist, und die Haltemittel die beiden Längskanten der Montageschiene (10) übergreifen, **dadurch gekennzeichnet, daß** an der Befestigungsplatte (70; 80) wenigstens ein Federelement (74; 86) angeordnet ist, das in der vorläufig an der Montageschiene (10) festgelegten Stellung federnd an dieser anliegt.

2. Tragvorrichtung nach Anspruch 1, **dadurch gekennzeichnet, daß** die Befestigungsplatte (70; 80) stufenlos in verschiedenen Längspositionen an der Montageschiene (10) festlegbar und vorzugsweise in der vorläufig festgelegten Stellung in Längsrichtung zu der Montageschiene (10) gegen Reibwiderstand verschieblich ist.

3. Tragvorrichtung nach Anspruch 2, **dadurch gekennzeichnet, daß** an der Montageschiene in Längsrichtung mehrere in Reihe angeordnete Vertiefungen vorgesehen sind, in welche die Federlaschen leicht lösbar einschnappbar sind.

4. Tragvorrichtung nach einem der vorhergehenden Ansprüche, **dadurch gekennzeichnet, daß** die Befestigungsplatte (16) in einem Rahmen (26) oder an wenigstens einem klammerartigen Halter (52) sitzt, an welchem die Haltemittel (30; 54) angeordnet sind, wobei der wenigstens eine Halter (52) nach der endgültigen Montage der Befestigungsplatte vorzugsweise (16) entfernbar ist.

5. Tragvorrichtung nach Anspruch 4, **dadurch gekennzeichnet, daß** der Rahmen (26) eine Durchbrechung (36) mit Haltelaschen (38) oder Haltekanten aufweist, die einen Halt für die Befestigungsplatte (16) senkrecht zur Schienenebene bilden.

6. Tragvorrichtung nach Anspruch 4 oder 5, **dadurch gekennzeichnet, daß** der Rahmen (26) bzw. der wenigstens eine Halter (52) aus Kunststoff vorzugsweise als Spritzgußteil gefertigt ist und/oder die Befestigungsplatte aus Metall oder Kunststoff besteht.

7. Tragvorrichtung nach Anspruch 6, **dadurch gekennzeichnet, daß** an die Befestigungsplatte aus Metall Haltemittel aus Kunststoff angespritzt sind.

8. Tragvorrichtung nach einem der vorhergehenden Ansprüche, **dadurch gekennzeichnet, daß** die Haltemittel (20, 30) über wenigstens ein elastisches Rastelement (24, 34) verfügen, das beim Andrücken der Befestigungsplatte (14, 16) an die Montageschiene (10) diese hintergreift.

9. Tragvorrichtung nach Anspruch 8, **dadurch gekennzeichnet, daß** an einer Längskante der Befestigungsplatte (14) bzw. des Rahmens (26) das wenigstens ein elastisches Rastelement (24, 34) zum Übergreifen einer Längsseite der Montageschiene (10) und an deren anderen Längskante ein schienenartiges Halteelement (18, 28) zum Umfassen der anderen Längsseite der Montageschiene (10) vorgesehen ist.

10. Tragvorrichtung nach einem der vorhergehenden Ansprüche, **dadurch gekennzeichnet, daß** wenigstens ein Federelement aus einem Gummielement (86) besteht, das zwischen den Haltemitteln (82) und der Montageschiene (10) in der vorläufig festgelegten Stellung elastisch verklemmt ist.

11. Tragvorrichtung nach Anspruch 10, **dadurch gekennzeichnet, daß** das Gummielement in einem schienenartig ausgebildeten Halteelement (82) an der Befestigungsplatte (84) liegt.

## Claims

1. A support device with a flat mounting rail (10) with longitudinal edges and a fastening plate (70,80) for the installation of fittings and pipes in the heating, sanitary and ventilation sector, which in each case have hole patterns (12), wherein holes (12) of the mounting rail (10) are situated in the mounting position in register with holes of the fastening plate (70,80), in which the mounting rail (10) and the fastening plate (70,80) are connected to one another by means of fastening elements of the fittings or pipes, wherein the fastening plate (70;80) has retaining means and can be temporarily located on the mounting rail (10) by said means (72;82,84) and the retaining means overlap the two longitudinal edges of the mounting rail (10), **characterised in that** at least one spring element (74;86) is disposed on the fastening plate (70;80), which in the position temporarily located on the mounting rail (10) abuts resiliently against the latter.

2. A support device according to Claim 1, **characterised in that** the fastening plate (70,80) can be located infinitely variably in different longitudinal positions on the mounting rail (10) and preferably can be displaced in the temporarily located position in a longitudinal direction relative to the mounting rail (10) counter to frictional resistance.

3. A support device according to Claim 2, **characterised in that** a plurality of recesses arranged in a row are provided on the mounting rail in a longitudinal direction, into which the resilient tabs can be snap-fitted in a readily releasable manner.

4. A support device according to any one of the preceding Claims, **characterised in that** the fastening plate (16) fits in a frame (26) or on at least one clip-type holder (52), on which the retaining means (30;54) are arranged, wherein the at least one holder (52) can preferably be removed after the final mounting of the fastening plate (16).

5. A support device according to Claim 4, **characterised in that** the frame (26) has an opening (36) with retaining lugs (38) or retaining edges which form a support for the fastening plate (16) perpendicular to the rail plane.

6. A support device according to Claim 4 or 5, **characterised in that** the frame (26) or the at least one holder (52) is made of plastics material, preferably as an injection-moulded part, and/or the fastening plate consists of metal or plastics material.

7. A support device according to Claim 6, **characterised in that** retaining means made of plastics material are injection-moulded on to the metal fastening plate.

8. A support device according to any one of the preceding Claims, **characterised in that** the retaining means (20,30) are provided with at least one elastic detent element (24,34) which when the fastening plate (14,16) is pressed on to the mounting rail (10) engages behind the latter.

9. A support device according to Claim 8, **characterised in that** the at least one elastic detent element (24,34) is provided on one longitudinal edge of the fastening plate (14) or of the frame (26) to engage over one longitudinal side of the mounting rail (10), and on the other longitudinal edge a rail-like retaining element (18,28) is provided to embrace the other longitudinal side of the mounting rail (10).

10. A support device according to any one of the preceding Claims, **characterised in that** at least one spring element comprises a rubber element (86) which is elastically wedged between the retaining means (82) and the mounting rail (10) in the temporarily located position.

11. A support device according to Claim 10, **characterised in that** the rubber element is disposed in a rail-like retaining element (82) on the fastening plate (84).

## Revendications

1. Dispositif de support comportant un rail de montage (10), plat, muni d'arêtes longitudinales et une plaque de fixation (70, 80) pour le montage de robinets et de conduites dans le domaine des installations de chauffage, d'eau sanitaire et de ventilation, et ayant respectivement un motif de trou (12),
les trous (12) du rail de montage (10) coïncidant avec les trous de la plaque de fixation (70, 80) en position de montage, et à l'aide d'éléments de fixation des robinets ou des conduites, on relie entre eux le rail de montage (10) et la plaque de fixation (14, 16),
la plaque de fixation (70, 80) ayant des moyens de retenue permettant de fixer provisoirement le rail de montage (10) à l'aide de ceux-ci (72 ; 82, 84) et les moyens de retenue entourent les deux arêtes longitudinales du rail de montage (10),
**caractérisé en ce qu'**
au moins un élément à ressort (74 ; 86) est prévu sur la plaque de fixation (70, 80) et dans la position de fixation provisoire sur le rail de montage (10) il s'applique élastiquement contre celui-ci.

2. Dispositif de support selon la revendication 1,
**caractérisé en ce que**
la plaque de fixation (70 ; 80) peut se bloquer en continu dans différentes positions longitudinales contre le rail de montage (10) et de préférence dans la position fixée provisoirement, elle peut être coulissée dans la direction longitudinale par rapport au rail de montage (10) contre une résistance de friction.

3. Dispositif de support selon la revendication 2,
**caractérisé en ce que**
sur le rail de montage, dans la direction longitudinale, il y a plusieurs cavités réparties en ligne et dans lesquelles peuvent s'enclipser les pattes élastiques, d'une manière facilement amovible.

4. Dispositif de support selon l'une des revendications précédentes,
**caractérisé en ce que**
la plaque de fixation (16) est portée dans un cadre (26) ou par au moins un support (52) en forme de pince, muni des moyens de retenue (30, 54), et au moins le support (52) s'enlève après le montage définitif de la plaque de fixation, de préférence (16).

5. Dispositif de support selon la revendication 4,
**caractérisé en ce que**
le cadre (26) comporte un passage (36) avec des pattes de retenue (38) ou des arêtes de retenue qui forment un moyen de retenue pour la plaque de fixation (16), perpendiculairement au plan du rail.

6. Dispositif de support selon la revendication 4 ou 5,
**caractérisé en ce que**
le cadre (26) ou au moins un support (52) sont réalisés en matière plastique, de préférence comme pièces injectées et/ou la plaque de fixation est en métal ou en matière plastique.

7. Dispositif de support selon la revendication 6,
**caractérisé en ce que**
sur la plaque de fixation en métal on a réalisé par surmoulage par injection des moyens de retenue en matière plastique.

8. Dispositif de support selon l'une des revendications précédentes,
**caractérisé en ce que**
les moyens de retenue (20, 30) comportent au moins un élément d'accrochage élastique (24, 34) qui lorsque la plaque de fixation (14, 16) est pressée contre le rail de montage (10), vient prendre derrière celui-ci.

9. Dispositif de support selon la revendication 8,
**caractérisé en ce que**
sur une arête longitudinale de la plaque de fixation (14) ou du cadre (26), au moins l'élément d'accrochage élastique (24, 34) chevauche un côté longitudinal du rail de montage (10) et au niveau de l'autre arête longitudinale, il est prévu un élément de retenue (18, 28) en forme de rail pour entourer l'autre grand côté du rail de montage (10).

10. Dispositif de support selon l'une des revendications précédentes,
**caractérisé par**
au moins un élément de ressort est formé par un élément en caoutchouc (86) serré entre les moyens de retenue (82) et le rail de montage (10), par serrage élastique dans une position fixée, provisoirement.

11. Dispositif de support selon la revendication 10,
**caractérisé en ce que**
l'élément en caoutchouc est situé dans un élément de fixation (82) en forme de rail sur la plaque de fixation (84).
